# EUROPÄISCHE PATENTANMELDUNG

(11) **EP 3 326 480 A1**
(43) Veröffentlichungstag der Anmeldung: **30.05.2018**
(21) Anmeldenummer: 17194860.7
(22) Anmeldetag: 05.10.2017
(51) Int. Cl.: A43B 1/10, A43B 13/04, A43B 23/02, A01L 5/00, C08K 13/02

(54) **FUSSBEKLEIDUNG FÜR EIN LEBEWESEN**

(30) Priorität: 29.11.2016 DE 102016223592
(71) Anmelder: Continental Reifen Deutschland GmbH, 30165 Hannover (DE)
(72) Erfinder: Müller, Matthias-Stephan, 30827 Garbsen (DE); Efimov, Konstantin, 30453 Hannover (DE); Naik, Shreyas, 30173 Hannover (DE); Minx, Carsten, 31535 Neustadt (DE); Hallmann, Steffen, 30171 Hannover (DE); Heinrich, Nikolas, 30823 Garbsen (DE)
(74) Vertreter: Finger, Karsten

(57) **Zusammenfassung**

Die Erfindung betrifft eine Fußbekleidung für ein Lebewesen, wie insbesondere eine Schuhsohle oder einen gummierten Hufschuh für ein Pferd.

Die erfindungsgemäße Fußbekleidung weist wenigstens eine Kautschukmischung auf, die 1 bis 200 phr wenigstens eines Pyrolyse-Rußes enthält.

## Beschreibung

Die Erfindung betrifft eine Fußbekleidung für ein Lebewesen, wie insbesondere eine Schuhsohle oder einen gummierten Hufschuh für ein Pferd.

Schuhsohlen weisen bekanntermaßen wenigstens eine Kautschukmischung auf, wobei die meisten Schuhsohlen aus verschiedenen Mischungen aufgebaut sind. Die Art der Mischung hängt von der Position in der Sohle und den Anforderungen an den jeweiligen Bereich ab. Die Mischung(en) für Schuhsohlen müssen dabei insbesondere dämpfend wirken, um die Gelenke zu schonen. Gleichzeitig sollte der Energieverlust jedoch insbesondere bei Laufschuhen nicht zu hoch sein.

Die gleichen Anforderungen gelten für gummierte Hufschuhe, insbesondere für Rennpferde. Gummierte Hufschuhe sind ebenfalls bekannt und weisen eine Profilschicht aus wenigstens einer Kautschukmischung auf, die mit dem Untergrund in Berührung kommt, also die Sohle des Hufschuhs.

Die Kautschukmischungen für Schuhsohlen und Hufschuhe weisen üblicherweise als Hauptfüllstoff Industrieruß auf, um die erforderliche Festigkeit im Hinblick auf die Anforderungen sicherzustellen, oder zumindest geringe Mengen Industrieruß als Pigment. Industrieruße weisen jedoch einen hohen Anteil an polyzyklischen aromatischen Kohlenwasserstoffen (PAK) auf. Polyzyklische aromatische Kohlenwasserstoffe sind gesundheitsschädlich. In der GS-Spezifikation - Spezifikation gemäß § 21 Abs. 1 Nr. 3 ProdSG - sind bspw. einzuhaltende PAK-Höchstgehalte für Materialien von relevanten Kontakt-/Griff- und Betätigungsflächen kategorisiert.

Der vorliegenden Erfindung liegt die Aufgabe zugrunde, eine Fußbekleidung für ein Lebewesen bereitzustellen, die im Vergleich zum Stand der Technik weniger gesundheitsschädlich und umweltfreundlicher ist bzw. die möglichst wenig bis gar keine PAK-haltigen Substanzen aufweist.

Gelöst wird die Aufgabe erfindungsgemäß dadurch, dass die Fußbekleidung wenigstens eine Kautschukmischung aufweist, die 1 bis 200 phr wenigstens eines Pyrolyse-Rußes enthält.

Überraschenderweise kann in der Fußbekleidung Pyrolyse-Ruß statt "herkömmlichen" Industrierußen eingesetzt werden, ohne dass sich die Eigenschaften, insbesondere die Dämpfungs- Rutschfestigkeits- und Abriebeigenschaften, verschlechtern.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Pyrolyse-Ruß ist dem Fachmann bekannt. Er wird wie beispielsweise in "Rubber Chemistry and Technology", Vol. 85, Nr. 3, Seiten 408 bis 449 (2012), insbesondere auf den Seiten 438 und 440 und 442, beschrieben, durch thermische Zersetzung von organischen Materialien bei 550 bis 800 °C unter Ausschluss von Sauerstoff oder mittels Vakuumpyrolyse bei vergleichsweise niedrigen Temperaturen im Bereich von 500 °C erhalten.
Im Rahmen der vorliegenden Erfindung handelt es sich bei den organischen Materialien bevorzugt um Altreifen und/oder vulkanisierten Produktionsabfällen aus der Reifenherstellung und/oder vulkanisierten Schläuchen, d. h. anfallende Abfallprodukte, die entsorgt werden müssen. Die Pyrolyse und Gewinnung von Pyrolyse-Ruß daraus, der erfindungsgemäß wieder Reifenmischungen zugesetzt wird, stellt somit einen Recyclingprozess dar.

Ein derartiger Pyrolyse-Ruß unterscheidet sich von bekannten Rußen, wie Industrierußen, insbesondere den ASTM-Rußen wie N660, u.a. im höheren Aschegehalt und gleichzeitig geringerem Gehalt an polyzyklischen aromatischen Kohlenwasserstoffen (PAK), wie beispielsweise der Homepage der Firma BlackBear Carbon BV zu entnehmen ist, http://www.blackbearcarbon.com/rfp-international/.

Ein wesentlicher Vorteil der vorliegenden Erfindung ist somit, dass Pyrolyse-Ruß eine gesundheits- und umweltfreundliche Alternative zu Industrierußen ist.

Der Pyrolyse-Ruß ist bevorzugt mittels Pyrolyse aus Altreifen und/oder vulkanisierten Produktionsabfällen aus der Reifenherstellung und/oder vulkanisierten Schläuchen hergestellt.
Besonders bevorzugt wurde der Pyrolyseruß aus Altreifen und/oder Schläuchen hergestellt, ganz besonders bevorzugt aus Altreifen.
Bei vulkanisierten Produktionsabfällen aus der Reifenherstellung kann es sich um alle denkbaren vulkanisierten Kautschukmischungen für Fahrzeugreifen handeln, die Kautschukmischungen im Verbund mit Festigkeitsträgern einschließen.

Im Rahmen der vorliegenden Erfindung wird unter dem Ausdruck "Pyrolyse-Ruß, der mittels Pyrolyse aus Altreifen und/oder vulkanisierten Produktionsabfällen aus der Reifenherstellung und/oder vulkanisierten Schläuchen hergestellt wurde" alle dem Fachmann bekannten Pyrolyse-Ruße aus Altreifen und/oder vulkanisierten Produktionsabfällen aus der Reifenherstellung und/oder vulkanisierten Schläuchen verstanden, wobei die aufgeführten Ausführungsformen bevorzugt sind.
Ein geeigneter Pyrolyse-Ruß kann beispielsweise von der Fa. BBC unter dem Handelsnamen BBC500 oder von der Fa. Pyrolyx AG unter dem Handelsnamen CB e 603 erhalten werden.

Im Rahmen der vorliegenden Erfindung wird unter dem Begriff "Industrieruße" die für Reifenmischungen bekannten Ruße, die keine Pyrolyse-Ruße sind, verstanden, die gemäß Römpp-Online-Lexikon © 2016 Georg Thieme Verlag KG (Stand 08.01.2016) üblicherweise einen Aschegehalt von weniger als 1 Gew.-% aufweisen und insbesondere sogenannte Furnace-Ruße, Gasruße oder Flammruße sind.

Der erfindungsgemäß enthaltene Pyrolyse-Ruß weist bevorzugt einen Aschegehalt von 5 bis 30 Gew.-%, besonders bevorzugt 10 bis 30 Gew.-%, ganz besonders bevorzugt 10 bis 20 Gew.-%, auf. Gemäß einer bevorzugten Ausführungsform der Erfindung beträgt der Aschegehalt 15 bis 20 Gew.-%.
Der Aschegehalt bezieht sich nur auf den Pyrolyse-Ruß und wird mittels thermogravimetrischer Analyse (TGA) gemäß ASTM D1506 des Pyrolyse-Rußes bestimmt.
Mit einem derartigen Aschegehalt wird insbesondere die Aufgabe gelöst, dass die Eigenschaften wie insbesondere die Dämpfungseigenschaften der erfindungsgemäßen Fußbekleidung nicht verschlechtert werden und gleichzeitig eine umwelt- und gesundheitsfreundliche Alternative bereitgestellt wird.

Der erfindungsgemäß enthaltene Pyrolyse-Ruß weist ferner bevorzugt einen SchwefelGehalt von größer als 1 Gew.-%, besonders bevorzugt größer als 2 Gew.-%, ganz besonders bevorzugt 2 bis 6 Gew.-%, wiederum ganz besonders bevorzugt 2 bis 4 Gew.-%, und wiederum ganz besonders bevorzugt 2,2 bis 4 Gew.-%, auf.
Mit einem derartigen Schwefelgehalt wird insbesondere die Aufgabe gelöst, dass die Eigenschaften wie insbesondere die Dämpfungseigenschaften der erfindungsgemäßen Fußbekleidung nicht verschlechtert werden und gleichzeitig eine umwelt- und gesundheitsfreundliche Alternative bereitgestellt wird.

Der Schwefelgehalt bezieht sich nur auf den Pyrolyse-Ruß und wird mittels ASTM D4239 des Pyrolyse-Rußes bestimmt.

Der erfindungsgemäß enthaltene Pyrolyse-Ruß weist ferner bevorzugt einen Kohlenstoffgehalt von 64 bis 87 Gew.-%, besonders bevorzugt 74 bis 87 Gew.-%, ganz besonders bevorzugt 78 bis 87 Gew.-%, auf.

Dem Fachmann ist bekannt, dass sich die Gewichtsanteile von Pyrolyse-Ruß aus enthaltener Asche, Schwefel und überwiegend (> 50 Gew.-%) Kohlenstoff zusammensetzen.

Der erfindungsgemäß enthaltene Pyrolyse-Ruß weist bevorzugt eine Jodadsorptionszahl gemäß ASTM D 1510 von 100 bis 130 g/kg und eine DBP-Zahl gemäß ASTM D 2414 von 50 bis 100 ml/100g, besonders bevorzugt 75 bis 95 ml/100g auf

Bei der erfindungsgemäßen Fußbekleidung kann es sich prinzipiell um jede Fußbekleidung handeln, die wenigstens eine Kautschukmischung enthaltend Füllstoffe aufweist. Diese Füllstoffe werden dann erfindungsgemäß vollständig oder zumindest teilweise durch Pyrolyse-Ruß ersetzt.

Bevorzugt beträgt die Menge an Pyrolyse-Ruß in der wenigstens einen Kautschukmischung der Fußbekleidung 1 bis 80 phr. In diesem Mengenbereich ist eine geringe Menge (unterer Bereich ab 1 phr) im Wesentlichen zum Schwarzfärben als Pigment sowie eine höhere Menge (bis 80 phr) im Wesentlichen als verstärkender Füllstoff umfasst.
Je nach Anwendung weisen die Kautschukmischungen unterschiedliche Mengen an Industrierußen und/oder Kieselsäure auf, die insbesondere durch den Pyrolyse-Ruß ersetzt werden.

In Kautschukmischungen, deren Hauptfüllstoff angebundene Kieselsäure ist, ist üblicherweise eine geringe Menge an Industrieruß als Pigment enthalten. Beide Füllstoffe können durch Pyrolyse-Ruß ersetzt werden: a) Die geringe Menge, z. B. und bevorzugt 1 bis 5 phr, Industrieruß mit dem Vorteil, dass der PAK-Gehalt der Mischung auf ein umwelt- und gesundheitsfreundliches Niveau abfällt und weiterhin eine Schwarzfärbung gegeben ist;
b) Die Kieselsäure als Hauptfüllstoff mit dem Vorteil, dass auf die erhöhten Kosten und Prozessschwierigkeiten durch die Kieselsäure und notwendige Silan-Kupplungsagenzien verzichtet werden kann bei gleichzeitig guten Dämpfungseigenschaften.

Gemäß einer bevorzugten Ausführungsform der Erfindung weist die Fußbekleidung daher wenigstens eine Kautschukmischung auf, die 1 bis 80 phr wenigstens eines Pyrolyse-Rußes und 0 bis maximal 3 phr, insbesondere bevorzugt maximal 0,1 phr, Industrieruße und 0 bis 80 phr Kieselsäure enthält.
In einer bevorzugten Ausführungsform enthält die Kautschukmischung 1 bis 10 phr wenigstens eines Pyrolyse-Rußes und 70 bis 80 phr Kieselsäure und 0 bis 0,1 phr Industrieruße, bevorzugt 0 phr Industrieruße.
In einer weiteren bevorzugten Ausführungsform der Erfindung enthält die Kautschukmischung 40 bis 80 phr wenigstens eines Pyrolyse-Rußes und 0 bis 10 phr Kieselsäure, bevorzugt 0 phr Kieselsäure, und 0 bis 0,1 phr Industrieruße, bevorzugt 0 phr Industrieruße.
Geringe Mengen bis zu 0,1 phr Industrieruße können über Verunreinigungen an der Mischerwand bei der Herstellung in die Kautschukmischung gelangen. Idealerweise enthält die Mischung jedoch 0 phr Industrieruße und ist somit frei von Industrierußen und damit von Substanzen, die einen zu hohen Anteil an PAK aufweisen.

Im Folgenden werden die Bestandteile der wenigstens einen Kautschukmischung der Fußbekleidung näher erläutert.

Der wenigstens eine Pyrolyse-Ruß wurde oben bereits ausgeführt, wobei auch ein Gemisch unterschiedlicher Pyrolyse-Ruße denkbar ist. Die angegebenen Mengen beziehen sich immer auf die Gesamtmenge an enthaltenen Pyrolyse-Rußen.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 120 bis 235 m²/g, und eine CTAB-Oberfläche (gemäß ASTM D 3765) von 30 bis 400 m²/g, bevorzugt von 50 bis 330 m²/g, besonders bevorzugt von 100 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z. B. Zeosil® 1165 MP der Firma Solvay), zum Einsatz kommen.

Als Industrieruß, sofern noch in der oder den Mischungen vorhanden, kommen alle der fachkundigen Person bekannte Rußtypen in Frage.
In einer Ausführungsform hat der Ruß eine Jodzahl, gemäß ASTM D 1510, die auch als Jodadsorptionszahl bezeichnet wird, zwischen 30 g/kg und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 80 bis 200 ml/100g.
Die DBP-Zahl gemäß ASTM D 2414 bestimmt das spezifische Absorptionsvolumen eines Rußes oder eines hellen Füllstoffes mittels Dibutylphthalat.

Als weitere Füllstoffe können alle in der Kautschukindustrie denkbaren Füllstoffe vorhanden sein, wie beispielsweise Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Weitere ggf. verstärkende Füllstoffe sind z. B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".
Zinkoxid gehört im Rahmen der vorliegenden Erfindung nicht zu den Füllstoffen.

Die weiteren Bestandteile der Kautschukmischungen umfassen bevorzugt wenigstens einen Dienkautschuk.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bevorzugt ist der wenigstens eine Dienkautschuk ausgewählt aus der Gruppe bestehend aus Naturkautschuk (NR), synthetischem Polyisopren (IR), Butadien-Kautschuk (BR), Styrol-Butadien-Kautschuk (SBR) und Nitril-Butadien-Kautschuk (NBR).

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.

Falls in der Kautschukmischung wenigstens ein Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Bevorzugt handelt es sich um wenigstens einen ESBR.
Die Begriffe "Styrol-Butadien-Kautschuk" und "Styrol-Butadien-Copolymer" werden im Rahmen der vorliegenden Erfindung synonym verwendet. Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.
Der Styrol-Butadien-Kautschuk (Styrol-Butadien-Copolymer) aus der Gruppe der weiteren Dienkautschuke ist im Rahmen der vorliegenden Anmeldung ein im Stand der Technik bekannter Styrol-Butadien-Kautschuk.

Besonderes bevorzugt handelt es sich bei dem Dienkautschuk um NR, IR, BR, ESBR und/oder NBR. Derartige Kautschuktypen sind insbesondere in Schuhsohlen geeignet. NBR wird insbesondere verwendet, um eine ausreichende elektrische Leitfähigkeit zu erzielen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten.

Gemäß einer bevorzugten Ausführungsform der Erfindung enthält die Kautschukmischung der Fußbekleidung jedoch keine Kieselsäure, sodass auch kein Silan-Kupplungsagens notwendig ist und die Mischung somit frei von Silanen ist, d.h. Ophr Silane enthält, was eine Kostenersparnis und weniger Schwierigkeiten bei der Herstellung der Mischung bedeutet.

Des Weiteren kann die Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), N, N'- bis-(1,4- Dimethylpentyl)-p-Phenylenediamin (77PD)
b) Aktivatoren, wie z. B. Zinkoxid und Fettsäuren (z. B. Stearinsäure),
c) Wachse,
d) Harze, insbesondere Klebharze,
e) Mastikationshilfsmittel, wie z. B. 2,2'-Dibenzamidodiphenyldisulfid (DBD und
f) Verarbeitungshilfsmittel, wie z. B. Fettsäuresalze, wie z. B. Zinkseifen, und Fettsäureester und deren Derivate.
g) Weichmacher, wie insbesondere aromatische, naphthenische oder paraffinische Mineralölweichmacher, wie z. B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse.
Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden. Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.
Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Gemäß einer Ausführungsform der Erfindung handelt es sich bei der Fußbekleidung um eine Schuhsohle, und zwar bevorzugt um die Schuhsohle eines Sportschuhes. Insbesondere Sportschuhe müssen gute Dämpfungseigenschaften bei gleichzeitig nicht zu hohem Energieverlust, sowie eine gute Rutschfestigkeit und einen ausreichenden Abriebwiderstand aufweisen.
Die Schuhsohle, insbesondere eines Sportschuhes, kann dabei eine Kautschukmischung über die gesamte Auftrittsfläche oder verschiedene Kautschukmischungen in den unterschiedlichen Bereichen der Auftrittsfläche aufweisen.
Hierbei ist es erfindungsgemäß prinzipiell denkbar, dass in allen Bereichen der Sohle eine Kautschukmischung vorgesehen ist, die 1 bis 200 phr, bevorzugt 1 bis 80 phr, wenigstens eines Pyrolyse-Rußes enthält.

Gemäß einer bevorzugten Ausführungsform der Erfindung weist die Schuhsohle, bevorzugt eine Sportschuhsohle, wenigstens einen Vorderfuß-Bereich und wenigstens einen Mittelfußbereich und wenigstens einen Hinterfußbereich auf, wobei die Bereiche die gleiche oder voneinander verschiedene Kautschukmischungen aufweisen können, die jeweils 1 bis 200 phr, bevorzugt 1 bis 80 phr wenigstens eines Pyrolyse-Rußes enthalten können.
Gemäß einer bevorzugten Ausführungsform der Erfindung wenigstens somit der Vorderfußbereich und/oder der Mittelfußbereich und/oder der Hinterfußbereich der Schuhsohle, bevorzugt Sportschuhsohle, die Kautschukmischung auf.
Für die Bestandteile der Kautschukmischung(en) gelten dabei sämtliche obige Ausführungen.
Der Vorderfußbereich ist dabei der Bereich der Sohle, der bei der Anwendung von der Fußspitze (dem Zehenbereich) belastet wird. Die Kautschukmischung des Vorderfußbereiches kann sich aber auch zumindest seitlich noch bis zum Mittelfuß-Bereich erstrecken.

Der Mittelfuß-Bereich der Schuhsohle ist entsprechend der Anatomie des Menschen mittig und zumindest teilweise unterhalb des Fußballens angeordnet. Die Kautschukmischung des Mittelfußbereiches kann sich aber auch zumindest teilweise noch bis zum Vorderfußbereich und/oder dem Hinterfußbereich erstrecken.

Der Hinterfußbereich der Schuhsohle ist entsprechend der Anatomie des Menschen zumindest teilweise im Fersenbereich angeordnet. Die Kautschukmischung des Hinterfuß-Bereiches kann sich aber auch bis zum Mittelfuß-Bereich erstrecken.

Sämtliche Bereiche, also insbesondere Vorderfuß-Bereich, Mittelfuß-Bereich und Hinterfuß-Bereich können durchgängig oder mit Öffnungen der beschriebenen Kautschukmischung(en) ausgeführt sein, sodass sich in den Öffnungen in Erstreckung senkrecht zur Sohlenfläche keine der beschriebenen Pyrolyse-Ruß-haltigen Kautschukmischung(en) befindet und die Kautschukmischung(en) die Öffnungen somit in der Sohlenfläche umgeben.
Prinzipiell ist jede Geometrie der Schuhsohlen denkbar, solange die Bedingung erfüllt ist, dass wenigstens eine Kautschukmischung 1 bis 200 phr, bevorzugt 1 bis 80 phr, wenigstens eines Pyrolyse-Rußes enthält.

Gemäß einer weiteren Ausführung der Erfindung handelt es sich bei der Fußbekleidung um einen gummierten Hufschuh für ein Pferd, insbesondere für ein Rennpferd. Gummierte Hufschuhe sind dem Fachmann bekannt und beispielsweise unter dem Internetauftritt http://www.cassaglia.de/ beschrieben.
Gummierte Hufschuhe weisen im Vergleich zu Hufeisen für das Pferd mehrere Vorteile auf: sie sind gelenkschonender, weisen ein vergleichsweise geringeres Gewicht sowie eine höhere Dämpfung und dynamische Flexibilität auf.

Gummierte Hufschuhe weisen dabei insbesondere wenigstens in der Sohle wenigstens eine Kautschukmischung auf, die für die gelenkschonendere Dämpfung und die zusätzlichen genannten Vorteile sorgt. Die Sohle ist dabei meist profiliert.
Gemäß der Ausführungsform der Erfindung enthält wenigstens eine Kautschukmischung wenigstens in der Sohle des gummierten Hufschuhes 1 bis 200 phr wenigstens eines Pyrolyse-Rußes, bevorzugt 1 bis 80 phr wenigstens eines Pyrolyse-Rußes.

Für die Kautschukmischung der beschriebenen Bereiche der Schuhsohle oder der Sohle des gummierten Hufschuhes gelten sämtliche obige Ausführungen zu den Bestandteilen der Pysrolyse-Ruß-haltigen Kautschukmischung.

Die Herstellung der Kautschukmischung der erfindungsgemäßen Fußbekleidung, die Pyrolyse-Ruß enthält, und die Herstellung der erfindungsgemäßen Fußbekleidung, insbesondere der Schuhsohle und des gummierten Hufschuhes erfolgen auf dem Fachmann bekannte Art und Weise, wobei insbesondere der Pyrolyse-Ruß wie Industrieruß eingearbeitet wird. Als geeigneter Pyrolyse-Ruß kann beispielsweise der unter dem Handelsnamen CB e 603 bekannte und erhältliche Pyrolyse-Ruß von der Fa. Pyrolyx AG verwendet werden.

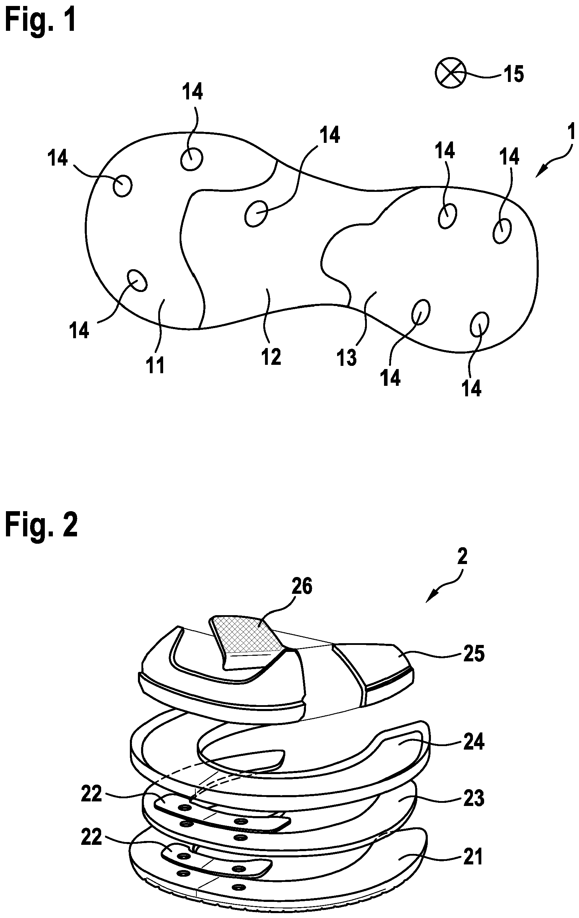

Im Folgenden soll die Erfindung anhand von Beispielen erläutert werden. Fig. 1 zeigt eine schematische, beispielhafte Ausführungsform einer möglichen Sportschuhsohle 1. In Fig. 1 entspricht die Blickrichtung 15 auf die Sohle der senkrecht zur Sohlenfläche verlaufenden Achse. Die Sohle gemäß Fig. 1 weist einen Vorderfuß-Bereich 11 auf, der sich wie in Fig. 1 erkennbar an beiden Seiten seitlich bis zum Mittelfuß-Bereich 12 erstreckt und aus einer Kautschukmischung enthaltend 1 bis 80 phr Pyrolyse-Ruß besteht. Die Kautschukmischung des Vorderfuß-Bereiches 11 weist dabei Öffnungen 14 auf, sodass in Blickrichtung 15 senkrecht zur Sohlenfläche die Mischung enthaltend Pyrolyse-Ruß in den Öffnungen nicht vorhanden ist.
Die Sohle 1 weist einen Mittelfußbereich 12 auf, der aus einer anderen Kautschukmischung gefertigt ist, die 1 bis 80 phr Pyrolyse-Ruß enthält. Die Mischung des Mittelfuß-Bereiches 12 erstreckt sich bis zum Vorderfuß-Bereich 11.

Der Hinterfußbereich 13 ist im Fersenbereich angeordnet und weist ebenfalls eine Kautschukmischung auf, die 1 bis 80 phr Pyrolyse-Ruß enthält. Die Mischung des Hinterfuß-Bereiches erstreckt sich bis zum Mittelfuß-Bereich.

Fig. 2 zeigt beispielhaft und schematisch die seitliche Ansicht eines gummierten Hufschuhes 2, wobei die einzelnen übereinander liegenden Lagen des Hufschuhes in der schematischen Ansicht der Übersichtlichkeit halber voneinander entfernt dargestellt sind. Der Hufschuh 2 weist eine Sohle 21 auf, die wenigstens eine Kautschukmischung enthaltend 1 bis 80 phr Pyrolyse-Ruß aufweist. Diese Kautschukmischung tritt bei Belastung in Kontakt mit dem Untergrund.
Ferner zeigt die Fig. 2 Stabilisatoren 22, einen Carbon-Kern 23, eine Schutzschicht 24 (transparenter Mantel aus Polyurethan), eine Vorrichtung zum Aufziehen 25 mit einer Klettverbindung 26.

### Bezugszeichenliste

### (Teil der Beschreibung)

1 Schuhsohle
11 Vorderfuß-Bereich der Schuhsohle
12 Mittelfuß-Bereich der Schuhsohle
13 Hinterfuß-Bereich der Schuhsohle
14 Öffnung
15 Blickrichtung, senkrecht zur Sohlenfläche der Schuhsohle

2 Gummierter Hufschuh
21 Sohle des Hufschuhes
22 Stabilisatoren
23 Carbon-Kern
24 Schutzschicht
25 Vorrichtung zum Aufziehen
26 Klettverbindung

## Patentansprüche

1. Fußbekleidung für ein Lebewesen, **dadurch gekennzeichnet, dass** sie wenigstens eine Kautschukmischung aufweist, die 1 bis 200 phr wenigstens eines Pyrolyse-Rußes enthält.

2. Fußbekleidung nach Anspruch 1, **dadurch gekennzeichnet, dass** der Pyrolyse-Ruß einen Aschegehalt von 5 bis 30 Gew.-% aufweist.

3. Fußbekleidung nach Anspruch 1 oder 2, **dadurch gekennzeichnet, dass** der Pyrolyse-Ruß einen Schwefelgehalt von größer als 1 Gew.-% aufweist.

4. Fußbekleidung nach einem der vorherigen Ansprüche, **dadurch gekennzeichnet, dass** die Kautschukmischung 1 bis 80 phr wenigstens eines Pyrolyse-Rußes enthält.

5. Fußbekleidung nach einem der vorherigen Ansprüche, **dadurch gekennzeichnet, dass** es sich um eine Schuhsohle (1) handelt.

6. Fußbekleidung nach Anspruch 5, **dadurch gekennzeichnet, dass** es sich um die Schuhsohle (1) eines Sportschuhes handelt.

7. Fußbekleidung nach Anspruch 6, **dadurch gekennzeichnet, dass** wenigstens der Vorderfußbereich (11) und/oder der Mittelfußbereich (12) und/oder der Hinterfußbereich (13) der Sportschuhsohle die Kautschukmischung aufweist.

8. Fußbekleidung nach einem der Ansprüche 1 bis 4, **dadurch gekennzeichnet, dass** es sich um einen gummierten Hufschuh (2) handelt, wobei wenigstens eine Kautschukmischung wenigstens in der Sohle (21) 1 bis 200 phr wenigstens eines Pyrolyse-Rußes enthält.

9. Fußbekleidung nach einem der vorherigen Ansprüche, **dadurch gekennzeichnet, dass** die Kautschukmischung wenigstens einen Dienkautschuk enthält, der ausgewählt ist aus der Gruppe bestehend aus Naturkautschuk (NR), synthetischem Polyisopren (IR), Butadien-Kautschuk (BR), Styrol-Butadien-Kautschuk (SBR) und Nitril-Butadien-Kautschuk (NBR).

10. Verwendung einer Kautschukmischung, die 1 bis 200 phr wenigstens eines Pyrolyse-Rußes enthält, in einer Fußbekleidung für Lebewesen.
